# EUROPEAN PATENT SPECIFICATION

(11) **EP 2 840 376 B1**
(45) Date of publication and mention of the grant of the patent: **02.11.2016**
(21) Application number: 12464006.1
(22) Date of filing: 04.05.2012
(51) Int. Cl.: G01M 3/22

(54) **Safety device for gas supply installation**
Sicherheitsvorrichtung zur Gasversorgungsinstallation
Dispositif de sécurité pour installation d'alimentation en gaz

(30) Priority: 04.05.2011 RO 201100416
(43) Date of publication of application: 25.02.2015
(73) Proprietor: Borsa, Ioan Marius, Cugir, judet Alba (RO)
(72) Inventor: Borsa, Ioan Marius, Cugir, judet Alba (RO)

(56) References cited:
- WO-A1-02/088656
- WO-A1-2006/034724
- US-A1- 2010 212 752

## Description

The invention refers to a gas installation, mounted on masonry walls, composed of CuSn pipes protected by an extensible polypropylene tube, having the role to collect eventual leaks from the installation and transmit such leaks to a safety control panel. The safety control panel is composed of earthquake gas sensors which, by means of an electro-valve, cut-off the gas supply when an eventual leakage occurs.

Gas installations mounted externally or on masonry walls are well-known. All these installations are made of copper or drawn steel pipe, mounted by means of threaded fittings (such as elbows, tees, reductions) and valves. The valves are typical for gas, hemp or Teflon being used for sealing. Hemp is lubricated with a special paste, to avoid drying from the gas circulating through the pipes. The connections must be checked every two years without a pressure test, and every ten years by means of a pressure test. The pipes passing through walls are made of a rigid tube having a role of protection for the gas pipe. The pipes passing or crossing by are installed above the windows at 5 cm from the ceiling, being forbidden to imbed them. In the vicinity of the consumption appliance, an electrical gas sensor is mounted, connected to the power supply, having the role of cutting-off the gas supply, in case of gas leakage inside the room.
WO02/088656 discloses a method and an apparatus for detecting leaks by wrapping a vessel such as a pipe or tank in a skin which traps escaping fluid at least long enough to direct it, in the vicinity of the leak. The disadvantage is that the skin is not suitable for gas installations embedded in walls, the sensor must be in the proximity of the leaking point in the pipe and the leak is not directed outside the building.
US2010/212752 discloses a system that shuts down water flow to a water heater of a residence or commercial building upon detecting a leak that includes valves, valve actuators, sensors, controllers that receive signals from the sensors. Such controllers controllably communicate with the valve actuators to close the valves, when a flow difference is detected that is greater than a predetermined threshold. WO 2006/034724 describes a double wall pipe with an inner high pressure pipe having an inner flow space for harmful and/or flammable liquids, particularly fuel to be injected or hydraulic oil, and with an outer protection pipe coaxially arranged around the inner pipe, having an outer flow space between inner pipe and outer pipe, for possibly leaking or spilling liquid from the inner pipe.

The disadvantages of such gas supply installations consist in a possible gas leakage at the connections of the installation, due to the hemp drying in time. In case of gas leakage from the installation, all these leakages cannot be controlled rapidly and instantly, as gas sensor would become inefficient, due to a possible power surge. There is no possibility for these gas leakages to be vented out of the building; moreover a gas accumulation is possible within the building or in the masonry embedded system's track, and one is not able to control the possible gas leakage of the system. In case of an earthquake, a steel pipe is displaced from connections and consequently it becomes a source for gas leakages. This requires a lot of work, and it also doesn't have a pleasant appearance.

This safety device for a gas supply installation has the role of preventing the system's gas leakages accumulated in buildings, in order to avoid the risk of explosions, and asphyxiations.

According to this invention, the safety device for gas supply installation overcomes the disadvantages shown above, because its purpose and quality is to control almost instantaneously the possible gas leakages of the masonry embedded system, by means of supplying a copper pipe (soft) protected by an extensible polypropylene tube. The copper pipe has no connections from distribution panel to the final gas consumption appliance. The safety device is provided+ with an earthquake gas sensor, an electro-valve, an allocator, and the safety panel located on distribution panel door provides some signaling leds (for functioning, damage, alarm), a reset button, a micro-switches group, a checking button, and a identification label.

This safety device for the masonry embedded gas supply system is the one that is going to control the possible leakages on the system's track and is going to turn off the building's gas supply system when the gas sensor detects such leakages. The device also turns off the building's gas supply system in case of earthquakes. This device makes the system safer and it allows the user to better control it. Each consumption appliance has a separate circuit and at the same time a controlled one.

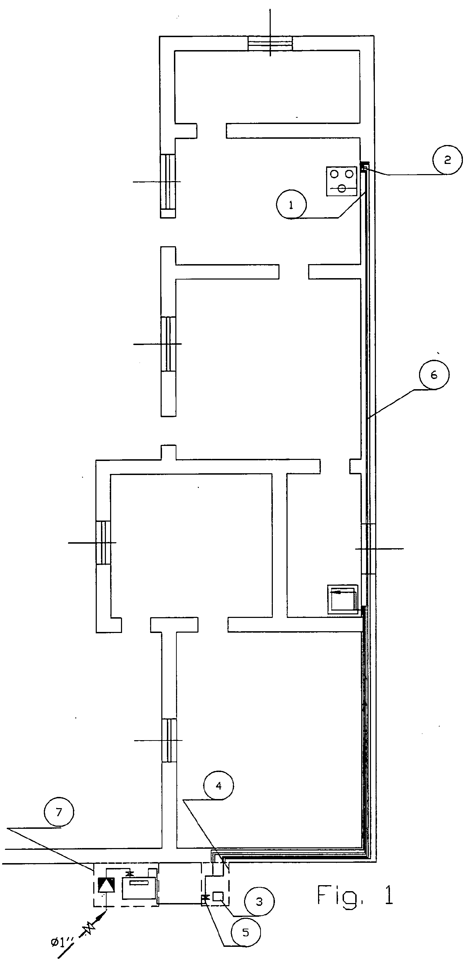

This safety device for gas supply installation is presented in Figures 1, 2, 3, to 7.

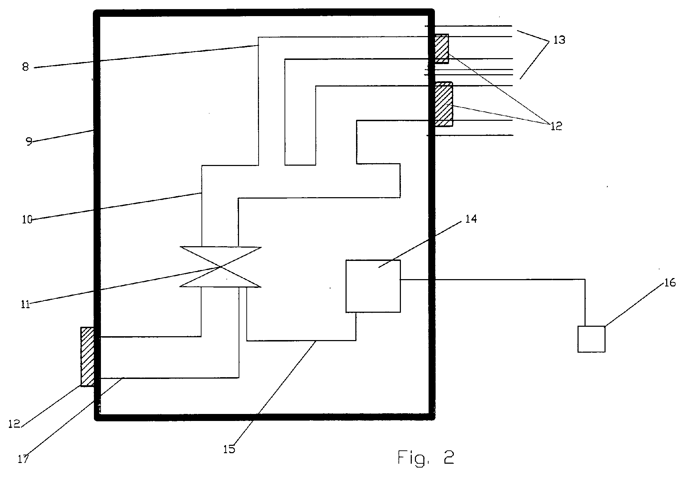

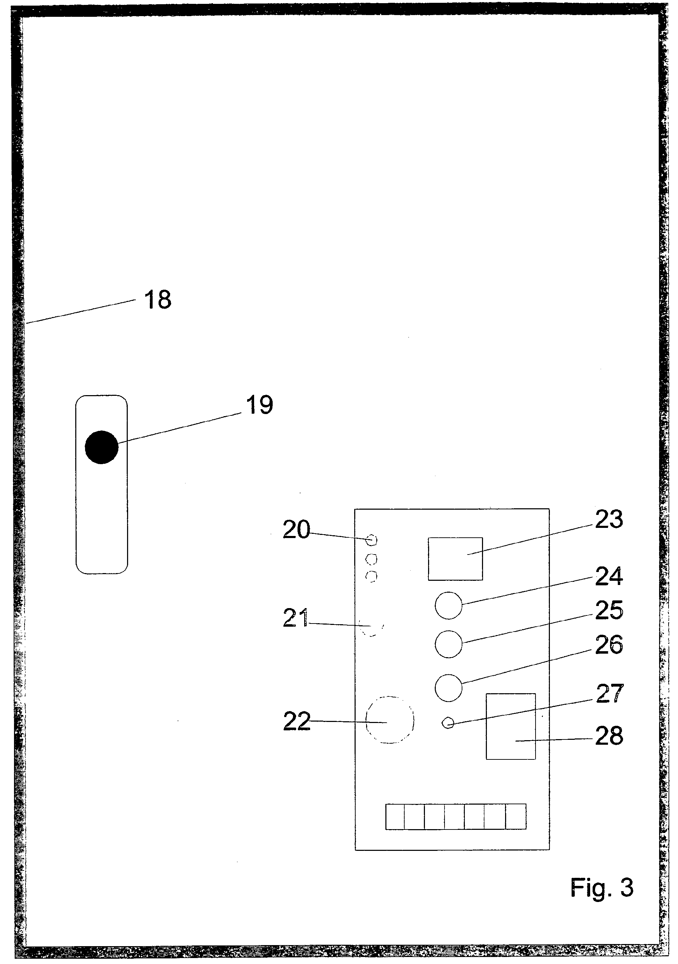

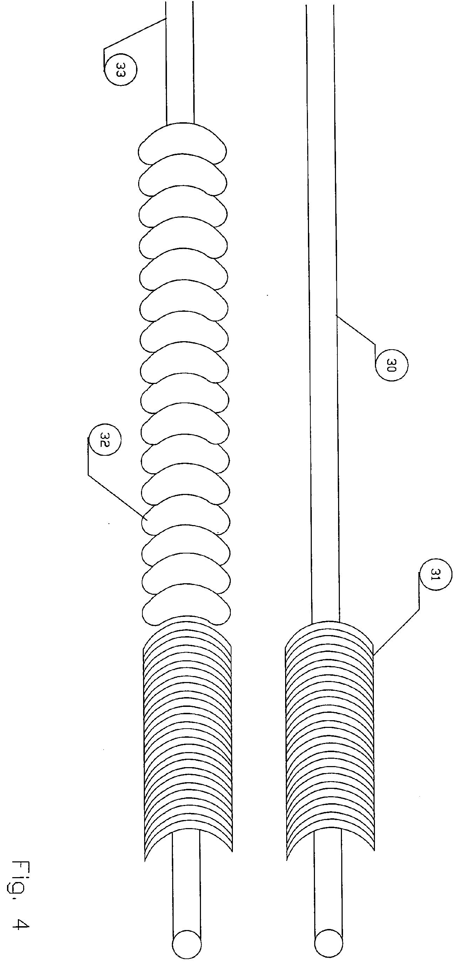

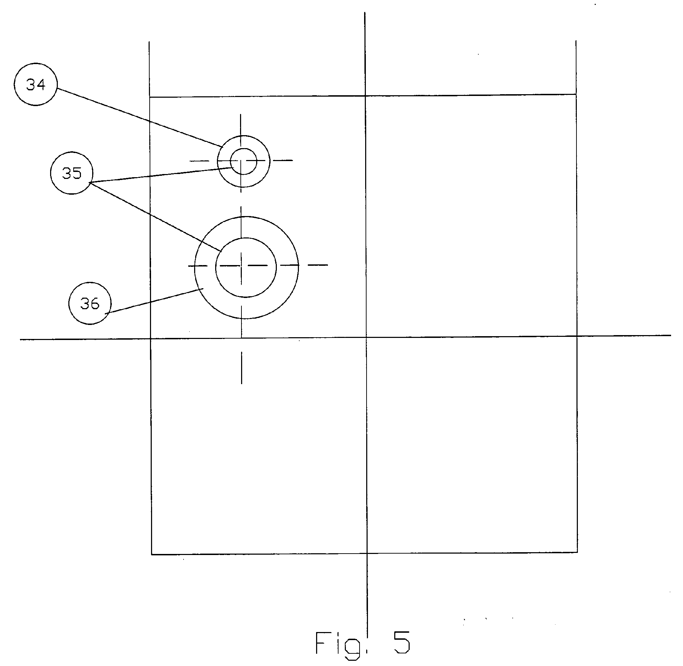

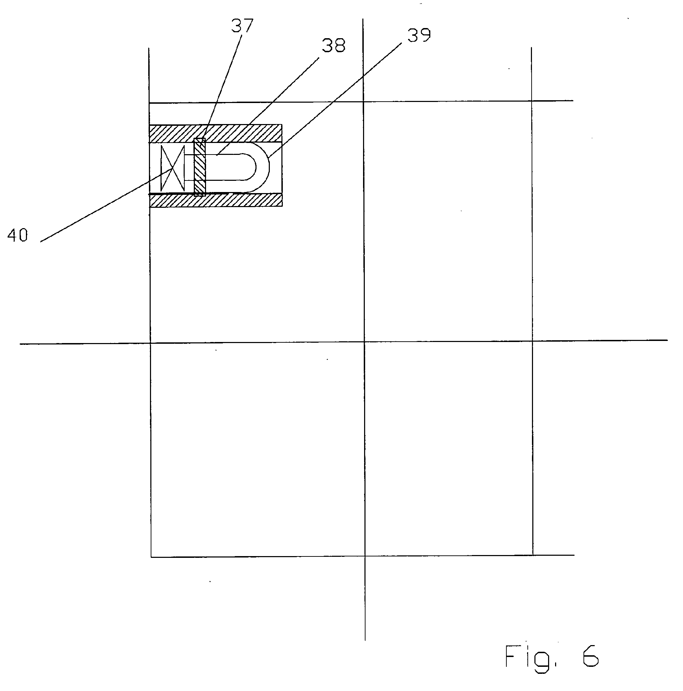

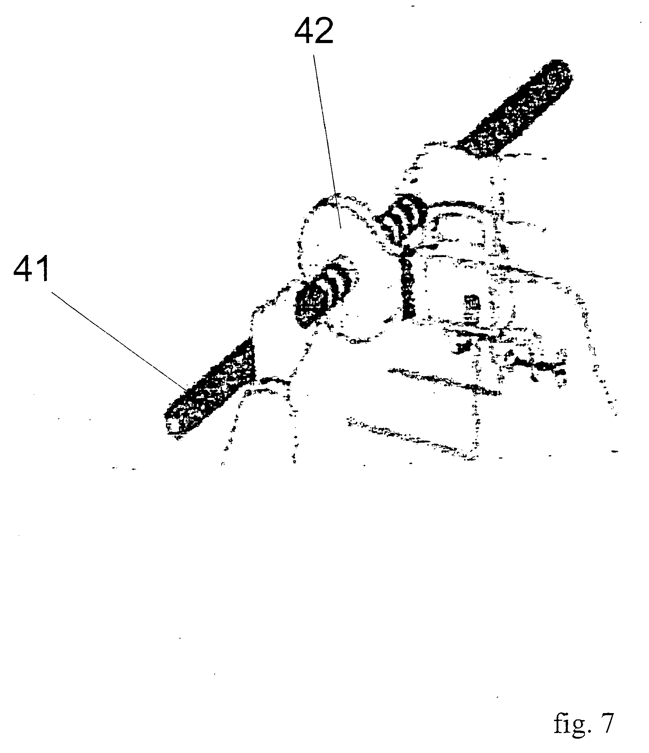

Figure 1 describes the building installation, Figure 2 describes a distribution panel, Figure 3 describes the safety panel, Figure 4 describes the copper pipe of installation and the protection and collection extensible polypropylene tube, Figure 5 describes the wall section of a supplying pipe, and a protection tube, Figure 6 describes a wall section from the consumer side, Figure 7 describes a welding method of extensible polypropylene tube by means of thermal fusion.

This safety device for gas supply installation is composed of a distribution panel (9), an extensible polypropylene tube for protection and gas collection (31, 32); this tube can be welded by thermal fusion with a welding device (42), in case an prolongation or recovery is necessary. On the consumer side, before the closing vent (40), a collar (37) is mounted for the protection of polypropylene tube fastening (39) on the copper gas pipe (38), preventing eventual gas leakages, but merely directing them to the gas earthquake sensor (14). This sensor, by means of a conductor (15) closes the electro valve (11), cutting-off the gas supply in case of gas leakages. The earthquake gas sensor located in the distribution panel (9), is powered directly from the power network (16). On the distribution panel door (18), a lock (19) and a safety sensor panel are located. This panel is composed of a button test (20), a checking button (21), an earthquake gas sensor (22), an identification label (23), a green light led indicating a good functioning (24), a yellow light led indicating damage (25), a red light led indicating alarm (26), a reset button (27) and a group of micro-switches (28). A protection polypropylene tube (13) is mounted on the other side of the distribution panel (9), on a collar (12) with a clamp for non permitting the gas dispersion outside. The copper pipe connection at the distribution panel and at the consumer appliance is done by welding. This way, an adaptor piece is welded on both endings of the copper pipe, and this piece has a thread connection to the closing valve (40). Welding is done with a silvered copper wire, and a propane heater. The gas pressure in the installation after the regulator is 0.5 bars, and for the copper pipe a pressure of 2 bars may be used. For a gas leakage of 10% in environment, the sensor reacts immediately. This level of 10% of leakage is below danger limit, so explosion or asphyxiation risk does not exist.

Even in case of a power surge, when the earthquake gas sensor (14) does not work and the electro valve (11) does not cut-off the gas supply, eventual leakages are collected by the extensible protection polypropylene tube (31, 32) and moved to the distribution panel (9), and then outside the building, as the distribution panel was mounted inside the building. Leakages are always evacuated through the protection polypropylene tube (31, 32), providing protection of the gas pipe (17) from distribution panel to the exterior of the building, for dispersion.

## Claims

1. Safety device for gas supply installation within the masonry wall of a building, for assuring an eventual gas leakage collection from buildings, and instantly cut-off gas supply, comprising a distribution panel (9) composed of a box, an allocator (10), an electro-valve (11) and a collar (12), **characterized in that** the safety device for gas supply also comprises an earthquake gas sensor (14) located in the distribution panel (9) for closing the electrovalve (11) in case of gas leakage or earthquake and a protective tube (31,32) of polypropylene for being placed around a gas pipe line (17, 30, 33) and mounted on the distribution panel (9) by means of the collar (12) in order to collect the gas leaked from the pipe line (17, 30, 33) and to conduct the leaked gas into the distribution panel (9).

2. Safety device for gas supply installation according to claim 1 wherein it further comprises a safety panel comprising a test button (20), a checking button (21), an identification label (23), leds indicating good functioning (24), damage (25) and alarm (26), a reset button (27) and a group of micro-switches (28).

## Patentansprüche

1. Sicherungsvorrichtung für unter dem Putz montierte Gasversorgungsanlagen, zwecks Sammlung der möglichen Gasverluste aus Innenräumen und zur sofortigen Sperrung der Gasversorgung, bestehend aus Verteilungspaneel (9), mit den folgenden Bestandteilen: Klemmenverteiler, Verteiler (10), Elektroventil (11), Schelle (12). Andere Bestandteile der Sicherungsvorrichtung für die Gasversorgung sind: seismischer Gassensor (14), der im Verteilungspaneel (9) angebracht ist, zum Schluss des Elektroventils (11) bei Auftritt von Gasverlusten oder Erdbeben, in einen Polypropylen-Schutzrohr (31, 32), der die Gasleitung (17, 30, 33) umschließt, und mit dem Verteilungspaneel (9) durch eine Schelle (12) abgeschlossen ist, um die Gasverluste auf dem Weg der Gasleitung (17, 30, 33) zu sammeln, und die so gesammelte Gasmenge In das Verteilungspaneel (9) zu führen.

2. Entsprechend der Anforderung Nr. 1, hat die Sicherungsvorrichtung der Gasversorgungsanlage auch ein Sicherheitspaneel bestehend aus. Testknopf (20), Prüfungsknopf (21), Identifizierungsschild (23), LED-Betriebslampe als Anzeiger des regelrechten Betriebs (24), eine LED-Lampe als Anzeiger für Schadensfälle (25), eine LED-Lampe für Alarm (26), eine Reset-Knopf (27), und eine Mikroschalter-Gruppe (28).

## Revendications

1. Dispositif de sécurité pour l'installation d'approvisionnement en gaz installé dans les parois de maçonnerie, qui assure la collection des éventuelles fuites de gaz de l'intérieur des bâtiments et l'interruption immédiate de l'approvisionnement en gaz, consistant d'un panneau de distribution (9), composé d'une boîte, un distributeur (10), une électrovanne (11) et un collier (12). De même, le dispositif de sécurité pour l'approvisionnement en gaz comprend un capteur sismique de gaz (14), localisé dans le panneau de distribution (9), pour la fermeture de l'électrovanne (11) en cas d'apparition d'une fuite de gaz ou d'un tremblement de terre, aussi qu'un tube de protection en polypropylène (31, 32) localisé autour du trajet du tuyau de gaz (17, 30, 33) et installé dans le panneau de distribution (9) à l'aide d'un collier (12), pour la collection du gaz écoulé dur le trajet du tuyau (17, 30, 33) et pour le transport du gaz écoulé dans le panneau de distribution (9).

2. Conformément à la revendication 1, le dispositif de sécurité pour l'installation d'approvisionnement en gaz comprend aussi un panneau de sécurité qui consiste d'un bouton de test (20), un bouton de vérification (21), une étiquette d'identification (23), une DEL qui indique le fonctionnement correcte (24), une DEL qui indique une défection (25), une DEL qui indique l'alarme (26), un bouton de réinitialisation (27), aussi qu'un groupe de micro-interrupteurs (28).
